# FASCICULE DE BREVET EUROPEEN

(11) **EP 2 703 928 B1**
(45) Date de publication et mention de la délivrance du brevet: **05.06.2019**
(21) Numéro de dépôt: 13181945.0
(22) Date de dépôt: 28.08.2013
(51) Int. Cl.: G05D 1/10, G02B 27/01, G05D 1/08, B64C 19/00, G01C 23/00

(54) **Système d'assistance à la tenue du vol stationnaire d'un hélicoptère**
Assistenzsystem zur Beibehaltung des stationären Flugs eines Hubschraubers
System to assist with maintaining the hovering of a helicopter

(30) Priorité: 31.08.2012 FR 1202340
(43) Date de publication de la demande: 05.03.2014
(73) Titulaire: THALES, 92400 Courbevoie (FR)
(72) Inventeur: Aymeric, Bruno, 33160 St Medard en Jalles (FR); Le Roux, Yannick, 33187 Le Haillan Cedex (FR); Hourlier, Sylvain, 33000 Bordeaux (FR)
(74) Mandataire: Bréda, Jean-Marc

(56) Documents cités:
- WO-A2-2009/081177
- US-A1- 2005 237 226
- TREVER TAYLOR: "Rotorcraft Visual Situational AwarenessSolving the Pilotage Problem for Landing in Degraded Visual Environments", PROCEEDINGS OF SPIE - THE INTERNATIONAL SOCIETY FOR OPTICAL ENGINEERING - ENHANCED AND SYNTHETIC VISION 2009, SPIE, US, vol. 7328, no. 73280G, 13 avril 2009 (2009-04-13), pages 1-12, XP009168753, ISBN: 978-0-8194-7594-7
- AJC REUS: "Supporting the Helicopter Pilot in Degraded Visual Environments", AVIONICS EUROPE CONFERENCE &EXHIBITION, 22 mars 2012 (2012-03-22), XP009168741, Munich

## Description

Le domaine de l'invention est celui du pilotage d'hélicoptère et plus particulièrement le maintien très précis d'une position stationnaire au-dessus d'un lieu déterminé. Ce maintien est rendu d'autant plus difficile par mauvaises conditions de visibilité ou lorsque l'hélicoptère est soumis à des turbulences de neige ou de poussière soulevées par les pales en rotation. On parle alors de phénomènes de « white out » ou de « brown out ».

Pour permettre une appréciation plus juste de la situation de l'hélicoptère, il a été proposé de présenter au pilote sur les moyens de visualisation de la planche de bord la situation de l'hélicoptère par rapport au terrain. Ainsi, les brevets ou demandes de brevet EP 2 388 760, EP 1 882 157 et WO 2012 003512 présentent des dispositifs où la situation de l'hélicoptère est représenté sur les écrans de visualisation de la planche de bord. Le brevet US 7 928 862 divulgue un dispositif dit « Head-Up Display» où les informations de position sont présentées en superposition sur le paysage extérieur dans le champ central de vision du pilote.

Ces dispositifs ont tous l'inconvénient de donner les informations en partie en dehors du champ utile de vision du pilote. En effet, les pilotes d'hélicoptère apprennent à maitriser le vol stationnaire en observant le terrain situé face à eux et en latéral sur le coté. Les extrémités de structure de la cabine de l'hélicoptère représentent des repères qui permettent de juger des déplacements horizontaux et verticaux de l'hélicoptère. La vision latérale est donc essentielle au maintien précis du vol stationnaire.

Ainsi, les méthodes de présentations d'informations existantes amènent le pilote à opérer dans un mode qui ne lui est plus familier et qui n'est pas nécessairement le mieux adapté.

Sur les hélicoptères modernes, les pilotes portent des casques comprenant des visuels de casque. Il devient alors possible de présenter des informations parfaitement superposées sur le paysage extérieur dans un grand domaine de débattement angulaire de la tête du pilote. On peut ainsi présenter des informations précises sur le maintien du vol stationnaire dans des conditions proches de celles habituellement utilisées par le pilote. La demande de brevet WO 2009/081177 divulgue quand à elle un système de visualisation de casque pour aider un pilote d'hélicoptère en phase d'atterrissage au moyen de symboles correspondant à des cibles référencées dans le repère terrestre.

L'invention a pour objet un système d'aide à la tenue au vol stationnaire d'un hélicoptère, ledit système comprenant au moins :
des moyens de navigation permettant de déterminer la position courante de l'hélicoptère en vol par rapport à un repère terrestre ;
un système de visualisation de casque comportant un dispositif de détection de posture de casque, un visuel de casque incorporé au casque du pilote dudit hélicoptère et des moyens de génération de symboles dans ledit visuel de casque à des positions fixes par rapport audit repère terrestre, lesdits symboles étant affichés lorsque ceux-ci se situent dans le champ angulaire d'affichage du visuel de casque ;
lorsque l'hélicoptère doit rallier ou se maintenir au voisinage d'une position prédéterminée dans ledit repère terrestre, les moyens de génération de symboles calculent une première représentation comportant une première cible et une seconde représentation comportant une seconde cible, lesdites cibles référencées dans ledit repère terrestre, la première cible localisée dans la direction du cap de ralliement à la position prédéterminée, la seconde cible localisée dans une direction perpendiculaire audit cap de ralliement.

La première représentation comporte un premier index correspondant au cap de ralliement et la seconde représentation comporte un second index correspondant à une direction perpendiculaire au cap de ralliement.

La première représentation et la seconde représentation comportent, au niveau du premier index et du second index, deux lignes perpendiculaires, les deux lignes se coupant au centre de chaque index, la première ligne représentant l'horizon.

Avantageusement, la première représentation comporte, au niveau du premier index une première indication de la vitesse verticale de l'hélicoptère et de la vitesse latérale de l'hélicoptère dans une direction perpendiculaire au cap, et en ce que la seconde représentation comporte, au niveau du second index, une seconde indication de la vitesse verticale de l'hélicoptère et de la vitesse dans la direction du cap de l'hélicoptère.

Avantageusement, la première représentation comporte une première maquette représentative de l'attitude de l'hélicoptère dans un plan perpendiculaire à la direction du cap et la seconde représentation comporte une seconde maquette représentative de l'attitude de l'hélicoptère dans un plan vertical et parallèle et à la direction du cap.

Avantageusement, la première représentation et la seconde représentation comportent une vue de dessus représentant au moins la position prédéterminée et la position courante de l'hélicoptère, ladite vue étant référencée dans le repère terrestre.

Avantageusement, la première cible comporte au moins deux montants verticaux identiques et des montants horizontaux parallèles entre eux, parallèles à la direction du cap et affichés en perspective.

Avantageusement, la première cible comporte un index longitudinal représentatif de la distance séparant l'hélicoptère de la position prédéterminée.

Avantageusement, la seconde cible comporte au moins deux montants verticaux identiques et des montants horizontaux parallèles entre eux et parallèles à la direction du cap.

Avantageusement, la première représentation et la seconde représentation comportent des représentations de zones dangereuses ou interdites localisées aux emplacements qu'elles occupent sur le terrain.

L'invention sera mieux comprise et d'autres avantages apparaîtront à la lecture de la description qui va suivre donnée à titre non limitatif et grâce aux figures annexées parmi lesquelles :
La figure 1 représente un synoptique du système d'aide à la tenue au vol stationnaire d'un hélicoptère selon l'invention ;
La figure 2 représente une vue tridimensionnelle de la position des cibles générées par la symbologie ;
La figure 3 représente la décomposition du vecteur vitesse de l'hélicoptère dans un repère particulier ;
La figure 4 représente une première figuration comportant une première cible ;
La figure 5 représente une seconde figuration comportant une première cible ;
La figure 6 représente une troisième figuration comportant une seconde cible ;
La figure 7 représente une quatrième figuration comportant une vue de dessus de la situation de l'hélicoptère ;
La figure 8 représente une cinquième figuration comportant une seconde cible et la représentation d'un obstacle ;
Les figures 9 et 10 représentent une sixième et une septième figurations représentant un hélicoptère en approche d'une position de vol stationnaire.

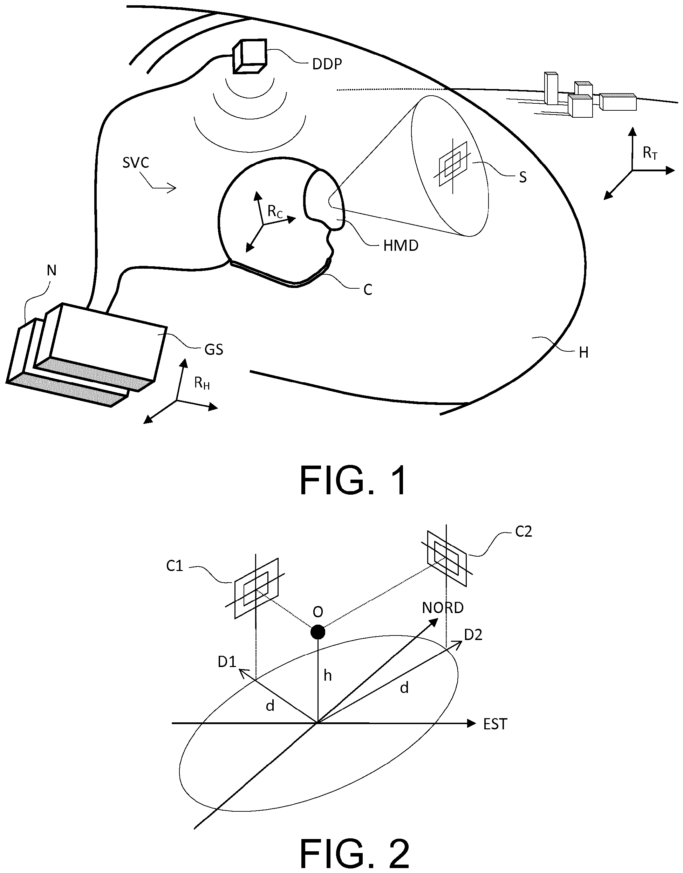

La figure 1 représente un synoptique d'un système selon l'invention d'aide à la tenue au vol stationnaire d'un hélicoptère H. Le système est disposé à l'intérieur de l'hélicoptère H. Il comporte des moyens de navigation N permettant de déterminer la position courante de l'hélicoptère en vol par rapport à un repère terrestre R_{T}, l'hélicoptère étant référencé dans un repère R_{H}. Ces moyens comprennent généralement une centrale à inertie, des capteurs de mesure de vitesse et d'accélération, un altimètre ou un radioaltimètre, des moyens de localisation par satellite, ...Le système d'aide comporte également un système de visualisation de casque SVC comportant un dispositif de détection de posture de casque DDP, un visuel de casque HMD incorporé au casque C du pilote dudit hélicoptère et des moyens de génération de symboles GS, le casque étant référencé dans un repère R_{C}. Sur la figure 1, le symbole S affiché dans le casque est une cible. Il existe différentes techniques pour assurer la détection de position de casque et le visuel de casque. Ces techniques, qui reposent sur des principes de détection optique ou électromagnétique, sont connues de l'homme du métier et ne sont pas détaillées dans cette description.

Grâce à ce système de visualisation de casque, il est possible de déterminer la position du casque dans le repère de l'hélicoptère et également dans le repère terrestre. Il est ainsi possible d'afficher des symbologies fixes dans le repère terrestre. Le système comporte également une interface homme-machine permettant de gérer, de contrôler et de paramétrer l'ensemble du système SVC. Cette interface qui peut prendre diverses formes n'est pas représentée sur la figure 1.

Traditionnellement, la symbologie affichée se situe au voisinage de l'axe de l'hélicoptère. La particularité du système SVC selon l'invention est que le système génère une symbologie à la fois dans l'axe mais également à 90 degrés de cet axe dans une direction qui, selon l'emplacement du pilote dans l'hélicoptère, se situe soit sur sa gauche, soit sur sa droite. Ainsi, en tournant la tête, le pilote passe d'une première symbologie à une seconde. L'ensemble de ces deux symbologies lui permet de parfaitement définir les écarts dans un espace tridimensionnel par rapport à une position déterminée, assurant ainsi au mieux le vol stationnaire de l'hélicoptère. De plus, ce passage d'une symbologie à l'autre correspond parfaitement aux façons de faire des pilotes d'hélicoptère lorsqu'ils doivent assurer le vol stationnaire sans assistance particulière.

Plus précisément, lorsque l'hélicoptère doit rallier ou se maintenir au voisinage d'une position prédéterminée localisée dans un repère terrestre, les moyens de génération de symboles calculent une première représentation comportant au moins une première cible et une seconde représentation comportant au moins une seconde cible, lesdites cibles référencées dans ledit repère terrestre et disposées en position conforme, la première cible localisée dans la direction du cap de ralliement à la position prédéterminée, la seconde cible localisée dans une direction perpendiculaire audit cap de ralliement. On entend par position conforme d'un symbole la position virtuelle qu'il est censé occuper dans un repère terrestre.

La figure 2 représente une vue tridimensionnelle de la position des cibles générées par la symbologie dans un repère terrestre R_{T} orienté selon les points cardinaux (NORD et EST sur la figure 2). La position prédéterminée du vol stationnaire de l'hélicoptère est située au point O centré sur le repère terrestre et est située à une altitude h. Le cap désiré de l'hélicoptère pour la phase de stationnaire se trouve dans la direction D1 et on note D2 la direction perpendiculaire à la direction D1. Les cibles C1 et C2 générées par les moyens de génération de symbologie sont situées à une distance virtuelle d du point O. La cible C1 est générée dans la direction D1 du cap désiré de l'hélicoptère et la cible C2 est générée dans la direction perpendiculaire D2 au cap de l'hélicoptère.

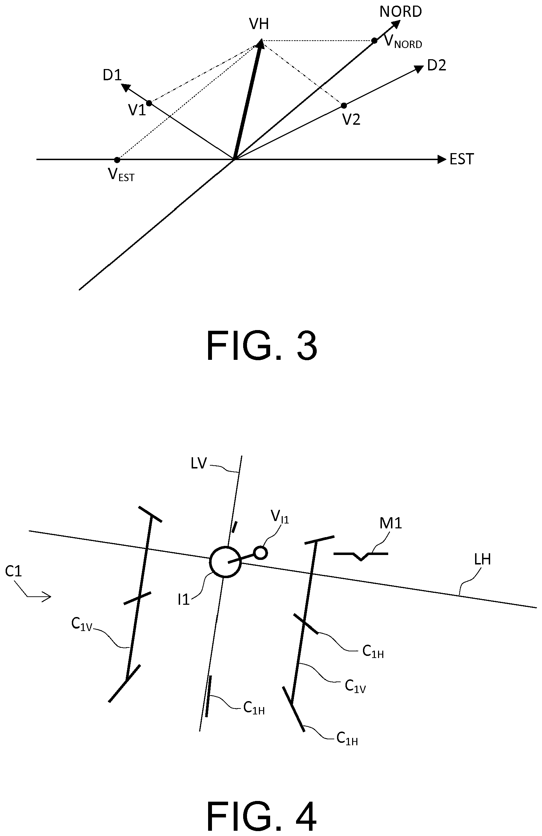

La figure 3 représente la composante horizontale VH de la vitesse de l'hélicoptère dans les deux repères précédents. Dans le repère terrestre (EST, NORD), cette composante VH a comme coordonnées (V_{EST}, V_{NORD})-Dans le repère (D1, D2), cette composante a comme coordonnées (V1, V2).

La génération de symboles selon l'invention se fait de la façon suivante :
- Acquisition de la position prédéterminée qui peut être, comme on le voit sur la figure 2, la combinaison d'une position en latitude/longitude et d'une hauteur h et du cap désiré dans la direction D1 ;
- Paramétrage par le pilote de la distance entre la position prédéterminée du vol stationnaire et les cibles C1 et C2. Plus les cibles sont proches, meilleure est la sensibilité de pilotage. En phase d'acquisition de la position, le pilote peut choisir une distance importante, puis la réduire pour affiner la précision de maintien de la position de son hélicoptère ;
- Calcul des coordonnées de deux cibles C1 et C2 dans le repère terrestre, sur une demande d'initialisation des paramètres de vol stationnaire, c'est-à-dire :
   ∘ Une cible C1 dans la direction du cap désiré ;
   ∘ Une cible C2 dans la direction perpendiculaire. La cible C2 est située à droite si le pilote est en place droite, à gauche sinon ;
- A chaque cycle d'affichage, le système d'aide effectue les opérations suivantes :
   ∘ Acquisition de la position et des attitudes de l'hélicoptère ;
   ∘ Acquisition de l'orientation de la tête du pilote ;
   ∘ Calcul de la position des cibles dans le repère lié à l'écran d'affichage du casque et affichage desdites cibles dans le visuel de casque. Ce calcul consiste à appliquer une matrice de rotation au vecteur partant de l'hélicoptère et se terminant à la cible. Cette matrice de transformation est calculée à partir des données d'attitude de l'hélicoptère par rapport au référentiel terrestre, et de la position de la tête du pilote par rapport à l'hélicoptère. Le calcul complet réalise cette transformation pour plusieurs points de la cible. Si les cibles ne sont pas visibles, elles ne sont pas affichées. En fait, une seule cible est affichée à tout instant ;
   ∘ Calcul des autres symbologies entourant les cibles C1 et C2.

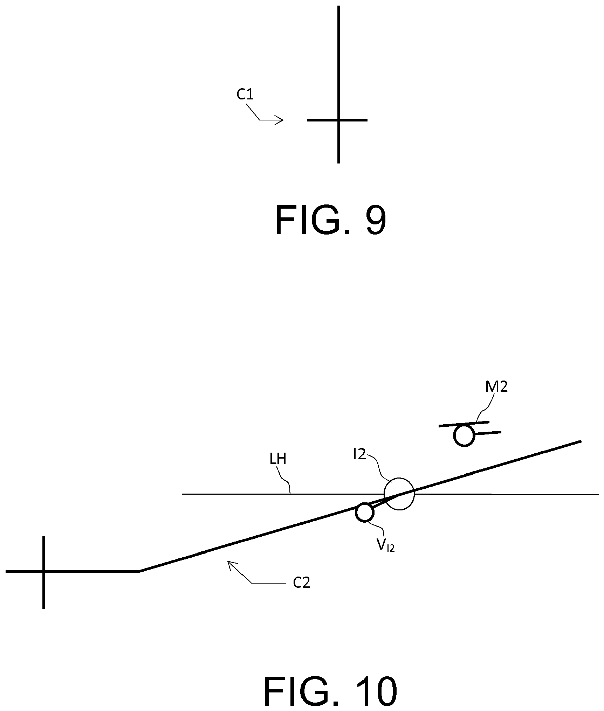

A titre d'exemples non limitatifs, les figures 4 à 10 représentent des symbologies selon l'invention. Ces symbologies sont représentées dans le repère du casque du pilote. Elles sont donc conformes à ce qu'il voit. Les figures 4 à 8 sont plus particulièrement dédiées au maintien en vol stationnaire. Les figures 9 et 10 sont représentatives des figurations représentant un hélicoptère en approche.

Ces symbologies peuvent avoir de nombreuses variantes selon le type d'appareil, les systèmes utilisées et les missions. Il est nécessaire cependant que les symboles conservent des formes géométriques simples de façon à ne pas encombrer inutilement la vision du paysage extérieur sur lequel ils viennent se superposer. On peut notamment jouer sur les représentations graphiques des cibles et des autres symboles contenus dans ces figures. On peut également faire varier les couleurs, la luminosité ou le clignotement des symboles affichés. Ces variantes simples restent dans le cadre de cette invention.

La figure 4 est une première figuration représentant une première représentation. Cette première représentation comporte une première cible représentée en traits gras sur la figure 4. Cette première cible C1 comporte deux traits parallèles C_{1V} et de même longueur et disposés selon la verticale dans un repère terrestre. La cible comporte également huit montants horizontaux C_{1H} parallèles entre eux, parallèles à la direction du cap et affichés en perspective. Ces montants se situent aux extrémités et au milieu des deux traits verticaux parallèles. Cette forme de symbologie fait que la cible représente de façon stylisée et vue du pilote un volume, en l'occurrence un cylindre creux à section carrée.

La première représentation comporte également un premier index correspondant au cap de ralliement représenté par un cercle I1. Il correspond au point de fuite des montants horizontaux de la cible C1. Cet index est disposé à la croisée de deux lignes perpendiculaires, la première ligne LH représentant l'horizon et la seconde ligne LV la verticale.

La première représentation comporte, au niveau du premier index I1 une première indication V_{I1} de la vitesse verticale de l'hélicoptère et de la vitesse latérale de l'hélicoptère dans une direction perpendiculaire au cap. Elle est représentée sous la forme d'un trait terminé par un cercle. L'orientation du trait donne l'orientation de la vitesse, la longueur du trait est représentative de la valeur de la vitesse.

Enfin, la première représentation comporte une première maquette M1 représentative de l'attitude de l'hélicoptère dans un plan perpendiculaire à la direction du cap. Elle est représentée traditionnellement par un V terminé par deux traits horizontaux symbolisant l'hélicoptère vu de face.

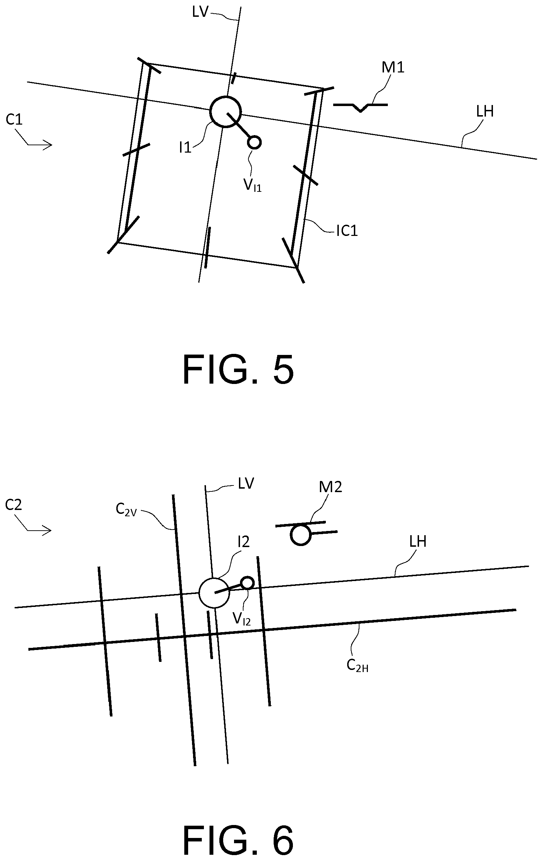

La figure 5 est une seconde figuration représentant une variante de la première représentation précédente. Cette figure 5 diffère de la figure 4 précédente par l'ajout d'un index d'écart longitudinal IC1. Sur la figure 5, cet index a la forme d'un carré aligné sur les montants verticaux et horizontaux de la cible C1. La position de cet index par rapport aux montants horizontaux renseigne le pilote sur l'écart existant dans la direction du cap entre la position de l'hélicoptère et la position prédéterminée du vol stationnaire. Le pilote dispose ainsi en vision frontale de toutes les informations nécessaires au pilotage de l'hélicoptère. Cependant, cet indicateur ne présente pas une grande précision. Il est utile d'ajouter soit en complément soit en substitution une seconde représentation comportant une seconde cible localisée dans une direction perpendiculaire au cap de ralliement.

La figure 6 est une troisième figuration représentant une seconde représentation. Cette seconde représentation comporte une seconde cible C2 représentée en traits gras sur la figure 6. Cette seconde cible comporte essentiellement, à la façon d'un réticule de viseur, deux traits perpendiculaires, l'un vertical C_{2V} et l'autre horizontal C_{2H} et des graduations secondaires verticales et horizontales. Cette seconde représentation comporte également comme la précédente :
un second index I2 correspondant au cap de ralliement représenté par un cercle. Cet index est perpendiculaire à la direction du cap correspondant à la cible C2 ;
au niveau du second index I2, une seconde indication V_{I2} de la vitesse verticale de l'hélicoptère et de la vitesse latérale de l'hélicoptère dans une direction parallèle au cap. Elle est représentée sous la forme d'un trait terminé par un cercle. L'orientation du trait donne l'orientation de la vitesse, la longueur du trait est représentative de la valeur de la vitesse ;
une seconde maquette M2 représentative de l'attitude de l'hélicoptère dans un plan parallèle à la direction du cap. Cette maquette M2 représente de façon symbolique un hélicoptère vu de profil.

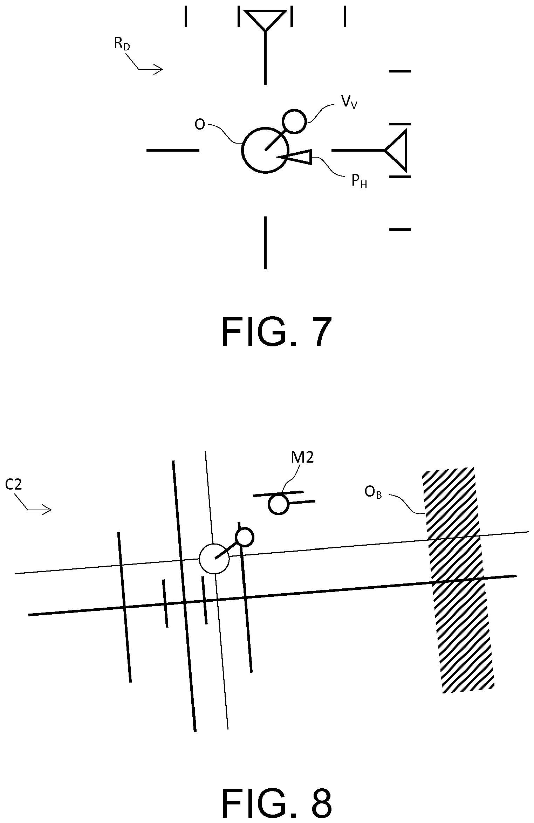

La figure 7 représente une vue de dessus de la situation de l'hélicoptère dans un plan horizontal. Cette vue peut être ajoutée dans la première représentation ou dans la seconde représentation. Cette vue est référencée dans le repère terrestre. Elle comporte au moins un référentiel gradué R_{D}, la position prédéterminée O et la position courante de l'hélicoptère P_{H} et un indicateur de la vitesse V_{V} de l'hélicoptère. Cette vue de dessus est disposée dans un repère terrestre et tourne donc avec l'orientation de la tête.

La figure 8 est une cinquième figuration représentant une seconde représentation. C'est une variante de la représentation de la figure 6. Cette seconde représentation comporte la représentation d'un obstacle O_{B}. Cet obstacle est représenté en vue conforme à la place qu'il occupe sur le terrain. A titre d'exemple non limitatif, dans le cas de la figure 6, cet obstacle est représenté par un rectangle hachuré. Bien entendu, la première représentation peut également comporter la représentation de tels obstacles.

Les figures 9 et 10 sont représentatives des figurations représentant un hélicoptère en approche haute d'un point fixe de vol stationnaire.

Comme on le voit sur la figure 9, la cible C1 est alors étendue vers le haut pour permettre l'alignement latéral de l'hélicoptère. Sur la figure 10, la cible C2 est étendue en amont de la position cible. Ainsi, en regardant de côté, le pilote peut s'assurer que son hélicoptère descend selon le plan vertical souhaité.

## Revendications

1. Système d'aide à la tenue au vol stationnaire d'un hélicoptère, ledit système comprenant au moins :
des moyens de navigation (N) permettant de déterminer la position courante de l'hélicoptère en vol par rapport à un repère terrestre (R_{T});
un système de visualisation de casque (SVC) comportant un dispositif de détection de posture de casque (DDP), un visuel de casque (HMD) incorporé au casque du pilote dudit hélicoptère et des moyens de génération de symboles (GS) affichés dans ledit visuel de casque à des positions virtuelles fixes par rapport audit repère terrestre, lesdits symboles étant affichés lorsque ceux-ci se situent dans le champ angulaire d'affichage du visuel de casque ;
tel que, lorsque l'hélicoptère doit rallier ou se maintenir au voisinage d'une position prédéterminée dans ledit repère terrestre, les moyens de génération de symboles calculent une première représentation comportant une première cible (C1) et une seconde représentation comportant une seconde cible (C2), lesdites cibles référencées dans ledit repère terrestre, la première cible localisée dans la direction (D1) du cap de ralliement à la position prédéterminée la première représentation comporte un premier index (I1) correspondant au cap de ralliement, le système d'aide étant **caractérisé en ce que**, la seconde cible est localisée dans une direction perpendiculaire (D2) audit cap de ralliement, la direction du cap de ralliement et la direction perpendiculaire audit cap de ralliement étant référencées par rapport à la position courante de l'hélicoptère, une seule cible étant affichée à tout instant, fonction de l'orientation du casque, et la seconde représentation comporte un second index (I2) correspondant à une direction perpendiculaire au cap de ralliement, la première représentation et la seconde représentation comportant, au niveau du premier index et du second index, deux lignes perpendiculaires (LV, LH), les deux lignes se coupant au centre de chaque index, la première ligne représentant l'horizon.

2. Système d'aide à la tenue au vol stationnaire d'un hélicoptère selon la revendication 1, **caractérisé en ce que** la première représentation comporte, au niveau du premier index une première indication (V_{I1}) de la vitesse verticale de l'hélicoptère et de la vitesse latérale de l'hélicoptère dans une direction perpendiculaire au cap, et **en ce que** la seconde représentation comporte, au niveau du second index, une seconde indication (V_{I2}) de la vitesse verticale de l'hélicoptère et de la vitesse dans la direction du cap de l'hélicoptère.

3. Système d'aide à la tenue au vol stationnaire d'un hélicoptère selon la revendication 1, **caractérisé en ce que** la première représentation comporte une première maquette (M1) représentative de l'attitude de l'hélicoptère dans un plan perpendiculaire à la direction du cap et la seconde représentation comporte une seconde maquette (M2) représentative de l'attitude de l'hélicoptère dans un plan vertical et parallèle et à la direction du cap.

4. Système d'aide à la tenue au vol stationnaire d'un hélicoptère selon la revendication 1, **caractérisé en ce que** la première représentation et la seconde représentation comportent une vue de dessus représentant au moins la position prédéterminée et la position courante de l'hélicoptère, ladite vue étant référencée dans le repère terrestre.

5. Système d'aide à la tenue au vol stationnaire d'un hélicoptère selon la revendication 1, **caractérisé en ce que** la première cible comporte au moins deux montants verticaux (C_{1V}) identiques et des montants horizontaux (C_{1H}) parallèles entre eux, parallèles à la direction du cap et affichés en perspective.

6. Système d'aide à la tenue au vol stationnaire d'un hélicoptère selon la revendication 5, **caractérisé en ce que** la première cible comporte un index (IC1) longitudinal représentatif de la distance séparant l'hélicoptère de la position prédéterminée.

7. Système d'aide à la tenue au vol stationnaire d'un hélicoptère selon la revendication 1, **caractérisé en ce que** la seconde cible comporte au moins deux montants verticaux (C_{2V}) identiques et des montants horizontaux (C_{2H}) parallèles entre eux et parallèles à la direction du cap.

8. Système d'aide à la tenue au vol stationnaire d'un hélicoptère selon la revendication 1, **caractérisé en ce que** la première représentation et la seconde représentation comportent des représentations (O_{B}) de zones dangereuses ou interdites en position conforme.

## Patentansprüche

1. Assistenzsystem zur Beibehaltung des stationären Flugs eines Hubschraubers, wobei das System mindestens Folgendes beinhaltet:
Navigationsmittel (N), welche es ermöglichen, die augenblickliche Position des Hubschraubers im Flug in Bezug auf ein terrestrisches Bezugssystem (R_{T}) zu bestimmen;
ein Helm-Anzeigesystem (SVC), welches eine Vorrichtung zum Erfassen der Helmstellung (DDP) beinhaltet, ein Helmbild (HMD), welches in den Helm des Piloten des Hubschaubers eingebaut ist, und Mittel zum Erzeugen von Symbolen (GS), welche in dem Helmbild an festen virtuellen Positionen in Bezug auf das terrestrische Bezugssystem angezeigt werden, wobei die Symbole angezeigt werden, wenn diese im Winkelanzeigefeld des Helmbilds befindlich sind;
in der Weise, dass, wenn der Hubschrauber eine in dem terrestrischen Bezugssystem vorbestimmte Position ansteuern oder sich in deren Nähe halten soll, die Symbolerzeugungsmittel eine erste Darstellung berechnen, welche ein erstes Ziel (C1) beinhaltet und eine zweite Darstellung, welche ein zweites Ziel (C2) beinhaltet, wobei die Ziele in dem terrestrischen Bezugssystem referenziert sind, wobei das erste Ziel in der Richtung (D1) des angesteuerten Kurses, an der vorbestimmten Position befindlich ist, wobei die erste Darstellung einen ersten Index (I1) beinhaltet, welcher dem angesteuerten Kurs entspricht, wobei das Assistenzsystem **dadurch gekennzeichnet ist, dass** das zweite Ziel in einer zum angesteuerten Kurs rechtwinkligen Richtung (D2) liegt, wobei die Richtung des angesteuerten Kurses und die zur Richtung des angesteuerten Kurses rechtwinklige Richtung in Bezug auf die augenblickliche Position des Hubschraubers referenziert sind, wobei ein einziges Ziel jederzeit angezeigt wird, angesichts von der Ausrichtung des Helms.
und die zweite Darstellung einen zweiten Index (I2) beinhaltet, welcher einer zur Richtung des angesteuerten Kurses rechtwinkligen Richtung entspricht, wobei die erste Darstellung und die zweite Darstellung auf Höhe des ersten Indizes und des zweiten Indizes zwei zueinander rechtwinklige Linien (LV, LH) beinhaltet, wobei die beiden Linien sich im Mittelpunkt eines jeden Indizes schneiden, wobei die erste Linie den Horizont darstellt.

2. Assistenzsystem zur Beibehaltung des stationären Flugs eines Hubschraubers nach Anspruch 1, **dadurch gekennzeichnet, dass** die erste Darstellung auf Höhe des ersten Indizes eine erste Angabe (V_{I1}) der vertikalen Geschwindigkeit des Hubschraubers in einer zum Kurs rechtwinkligen Richtung beinhaltet, und dadurch, dass die zweite Darstellung auf Höhe des zweiten Indizes eine zweite Angabe (V_{I2}) der vertikalen Geschwindigkeit des Hubschraubers und der Geschwindigkeit in der Kursrichtung des Hubschraubers beinhaltet.

3. Assistenzsystem zur Beibehaltung des stationären Flugs eines Hubschraubers nach Anspruch 1, **dadurch gekennzeichnet, dass** die erste Darstellung ein erstes Modell (M1) beinhaltet, welches die Fluglage des Hubschraubers in einer zur Kursrichtung rechtwinkligen Ebene darstellt und die zweite Darstellung ein zweites Modell (M2) beinhaltet, welches die Fluglage des Hubschraubers und in einer vertikalen und zur Kursrichtung parallelen Ebene beinhaltet.

4. Assistenzsystem zur Beibehaltung des stationären Flugs eines Hubschraubers nach Anspruch 1, **dadurch gekennzeichnet, dass** die erste Darstellung und die zweite Darstellung eine Draufsicht beinhalten, welche mindestens die vorbestimmte und die augenblickliche Position des Hubschraubers darstellen, wobei die Sicht in dem terrestrischen Bezugssystem referenziert ist.

5. Assistenzsystem zur Beibehaltung des stationären Flugs eines Hubschraubers nach Anspruch 1, **dadurch gekennzeichnet, dass** das erste Ziel mindestens zwei identische vertikale Streben (C_{1V}) und parallel zueinander angeordnete horizontale Streben (C_{1H}) beinhaltet, welche parallel zur Kursrichtung sind und perspektivisch angezeigt werden.

6. Assistenzsystem zur Beibehaltung des stationären Flugs eines Hubschraubers nach Anspruch 5, **dadurch gekennzeichnet, dass** das erste Ziel einen Längsindex (IC1) beinhaltet, welcher den Abstand darstellt, der den Hubschrauber von der vorbestimmten Position trennt.

7. Assistenzsystem zur Beibehaltung des stationären Flugs eines Hubschraubers nach Anspruch 1, **dadurch gekennzeichnet, dass** das zweite Ziel mindestens zwei identische vertikale Streben (C_{2V}) und parallel zueinander angeordnete und zur Kursrichtung parallele horizontale Streben (C_{2H}) beinhaltet.

8. Assistenzsystem zur Beibehaltung des stationären Flugs eines Hubschraubers nach Anspruch 1, **dadurch gekennzeichnet, dass** die erste Darstellung und die zweite Darstellung Darstellungen (O_{B}) von Gefahrzonen oder verbotenen Zonen in regulärer Position beinhalten.

## Claims

1. System to assist with maintaining the hovering of a helicopter, said system comprising at least:
navigation means (N) for determining the current position of the helicopter in flight relative to a terrestrial reference frame (R_{T});
a helmet visualisation system (SVC) comprising a helmet posture detection (DDP) device, a helmet display (HMD) incorporated into the helmet of the pilot of said helicopter and means for generating symbols (GS) displayed in said helmet display at fixed virtual positions relative to said terrestrial reference frame, said symbols being displayed when these are situated in the angular field of display of the helmet display;
such that, when the helicopter should home or be maintained close to a predetermined position in said terrestrial reference frame, means for generating the symbols calculate a first representation comprising a first target (C1) and a second representation comprising a second target (C2), said targets referenced in said terrestrial reference frame, the first target located in the direction (D1) of the homing course to the predetermined position the first representation comprises a first index (II) corresponding to the homing course, the assistance system being **characterised in that**, the second target is located in a direction perpendicular (D2) to said homing course, the direction of the homing course and the direction perpendicular to said homing course being referenced relative to the current position of the helicopter, a single target being displayed at any time, as a function of the orientation of the helmet.
and the second representation comprises a second index (12) corresponding to a direction perpendicular to the homing course, the first representation and the second representation comprising, at the level of the first index and the second index, two perpendicular lines (LV, LH), the two lines intersecting at the centre of each index, the first line representing the horizon.

2. System to assist with maintaining the hovering of a helicopter according to claim 1, **characterised in that** the first representation comprises, at the level of the first index a first indication (V_{I1}) of the vertical velocity of the helicopter and the lateral velocity of the helicopter in a direction perpendicular to the course, and **in that** the second representation comprises, at the level of the second index, a second indication (V_{I2}) of the vertical velocity of the helicopter and the velocity in the direction of the course of the helicopter.

3. System to assist with maintaining the hovering of a helicopter according to claim 1, **characterised in that** the first representation comprises a first model (M1) representative of the attitude of the helicopter in a plane perpendicular to the direction of the course and the second representation comprises a second model (M2) representative of the attitude of the helicopter in a vertical plane and parallel and to the direction of the course.

4. System to assist with maintaining the hovering of a helicopter according to claim 1, **characterised in that** the first representation and second representation comprise a top view representing at least the predetermined position and the current position of the helicopter, said view being referenced in the terrestrial reference frame.

5. System to assist with maintaining the hovering of a helicopter according to claim 1, **characterised in that** the first target comprises at least two identical vertical bars (C_{1V}) and some horizontal bars (C_{1H}) parallel to each other, parallel to the direction of the course and displayed in perspective.

6. System to assist with maintaining the hovering of a helicopter according to claim 5, **characterised in that** the first target comprises a longitudinal index (IC1) representative of the distance separating the helicopter from the predetermined position.

7. System to assist with maintaining the hovering of a helicopter according to claim 1, **characterised in that** the second target comprises at least two identical vertical bars (C_{2V}) and some horizontal bars (C_{2H}) parallel to each other and parallel to the direction of the course.

8. System to assist with maintaining the hovering of a helicopter according to claim 1, **characterised in that** the first representation and the second representation comprise representations (O_{B}) of dangerous or forbidden zones positioned accordingly.
